# EUROPÄISCHE PATENTANMELDUNG

(11) **EP 1 026 429 A2**
(43) Veröffentlichungstag der Anmeldung: **09.08.2000**
(21) Anmeldenummer: 00101561.9
(22) Anmeldetag: 27.01.2000
(51) Int. Cl.: F16K 11/078

(54) **Eingriffmischventil**

(30) Priorität: 05.02.1999 DE 19904705
(71) Anmelder: Friedrich Grohe AG & Co. KG, 58675 Hemer (DE)
(72) Erfinder: Pawelzik, Manfred, 59494 Soest (DE); Derr, Max, 58638 Iserlohn (DE)

(57) **Zusammenfassung**

Bei einem Ventil, bestehend aus
- einem Ventilgehäuse (11) mit einer Mittelachse (111),
- einer Ventilsitzscheibe (12), die im Ventilgehäuse (11) ortsfest zu dessen Mittelachse (111) gelagert ist und die wenigstens auf einem um die Mittelachse (111) angeordneten Kreisbogen eine Einlassöffnung für Kaltwasser (1201) und eine Einlassöffnung (1202) für Warmwasser aufweist,
- einer Steuerscheibe (13), die auf der Ventilsitzscheibe (12) in zwei Freiheitsgraden verstellbar angelagert und die mit wenigstens einem Misch- und/oder Überströmkanal (132) versehen ist, der mit den Einlassöffnungen (1201,1202) zum Einstellen des Mischungsverhältnisses und der Gesamtdurchflußmenge in Verbindung bringbar ist,
- einem im Ventilgehäuse (11) in zwei Freiheitsgraden bewegbar angeordneten Hebel (14), der mit der Steuerscheibe (13) und einem Griffstück zur Steuerung verbunden ist,
ist zur Einstellung der Gesamtdurchflußmenge durch eine Drehbewegung um eine Mittelachse (111) und zur Einstellung des Mischungsverhältnisses durch eine Schwenkbewegung um eine Schwenkachse vorgeschlagen, dass die Steuerscheibe zwei Durchbrüche (1301,1302) für Kalt- und Warmwasser zur Verbindung mit den Einlassöffnungen (1201,1202) in der Ventilsitzscheibe (12) aufweist, wobei wenigstens die Durchbrüche (1301,1302) für Kalt- und Warmwasser auf unterschiedlichen Kreisradien angeordnet sind, derart, dass die Einlassöffnungen (1201,1202) mit beiden Durchbrüchen (1301,1302) maximal zur Hälfte in Überdeckung gelangen können.

## Beschreibung

Die Erfindung betrifft ein Ventil, bestehend aus
- einem Ventilgehäuse mit einer Mittelachse,
- einer Ventilsitzscheibe, die im Ventilgehäuse ortsfest zu dessen Mittelachse gelagert ist und die wenigstens auf einem um die Mittelachse angeordneten Kreisbogen eine Einlassöffnung für Kaltwasser und eine Einlassöffnung für Warmwasser aufweist,
- einer Steuerscheibe, die auf der Ventilsitzscheibe in zwei Freiheitsgraden verstellbar angelagert und die mit wenigstens einem Misch- und/oder Überströmkanal versehen ist, der mit den Einlassöffnungen zum Einstellen des Mischungsverhältnisses und der Gesamtdurchflussmenge in Verbindung bringbar ist,
- einem im Ventilgehäuse in zwei Freiheitsgraden bewegbar angeordneten Hebel, der mit der Steuerscheibe und einem Griffstück zur Steuerung verbunden ist.

Ein Ventil dieser Gattung ist aus der Druckschrift DE 32 44 121 A1 bekannt. Bei diesem Ventil erfolgt die Einstellung des Mischungsverhältnisses von Kalt- und Warmwasser mit einer Drehbewegung des Hebels, während die Einstellung der Gesamtdurchflussmenge mit einer Schwenkbewegung des Hebels um eine senkrecht zur Mittelachse angeordnete Schwenkachse vorgenommen wird. Die Einstellung des Mischungsverhältnisses durch eine Drehbewegung und die Einstellung der Gesamtdurchflussmenge pro Zeiteinheit durch eine Schwenkbewegung hat sich im allgemeinen als zweckmäßig erwiesen. Andererseits kann es insbesondere bei besonderen Ventilanordnungen zweckmäßig sein, die Einstellung der beiden Ventilwerte in umgekehrter Weise durchzuführen. Aus der deutschen Offenlegungsschrift 26 27 923 ist es daher bereits bei einem anderen Ventil mit einem Steuerkolben bekannt, die Einstellung des Mischungsverhältnisses durch eine Schwenkbewegung und die Gesamtdurchflussmenge pro Zeiteinheit durch eine Drehbewegung um eine Mittelachse durchzuführen.

Der Erfindung liegt die Aufgabe zugrunde, das im Oberbegriff des Anspruchs 1 angegebene Ventil so auszubilden, dass mit dem Griffstück durch eine Drehbewegung um die Mittelachse die Gesamtdurchflussmenge und durch eine Schwenkbewegung um die Schwenkachse das Mischungsverhältnis einstellbar ist.

Diese Aufgabe wird erfindungsgemäß dadurch gelöst, dass die Steuerscheibe zwei Durchbrüche für Kalt- und Warmwasser zur Verbindung mit den Einlassöffnungen in der Ventilsitzscheibe aufweist, wobei wenigstens die Durchbrüche für Kalt- und Warmwasser auf unterschiedlichen Kreisradien angeordnet sind, derart, dass die Einlassöffnungen mit beiden Durchbrüchen maximal zur Hälfte in Überdeckung gelangen.

Weitere Ausgestaltungen der Erfindung sind in den Ansprüchen 2 bis 20 angegeben.

Ausführungsbeispiele der Erfindung sind in der Zeichnung dargestellt und werden im folgenden näher beschrieben. Es zeigt
- Fig. 1: ein Eingriffwassermischventil in Seitenansicht, teilweise geschnitten;
- Fig. 2: das in Fig. 1 gezeigte Eingriffwassermischventil in der Schnittebene II;
- Fig. 3: das in Fig. 1 gezeigte Mischventil in vergrößerter Darstellung im Längsschnitt;
- Fig. 4: eine in Fig. 3 gezeigte Steuerscheibe in Draufsicht;
- Fig. 5: eine in Fig. 3 gezeigte Ventilsitzscheibe in Draufsicht;
- Fig. 6: die in Fig. 3 gezeigte Paarung der Ventilsitzscheibe mit der Steuerscheibe in Draufsicht in Absperrstellung;
- Fig. 7: die in Fig. 6 gezeigte Ventilscheibenpaarung in der voll geöffneten Kaltwasserstellung;
- Fig. 8: die in Fig. 6 gezeigte Ventilscheibenpaarung in der voll geöffneten Warmwasserstellung;
- Fig. 9: die in Fig. 6 gezeigte Ventilscheibenpaarung in zur Hälfte geöffneter Kaltwasserstellung;
- Fig. 10: die in Fig. 6 gezeigte Ventilscheibenpaarung in einer mittleren Mischposition bei voll geöffneter Gesamtdurchflussstellung;
- Fig. 11: eine andere Steuerscheibe in Draufsicht;
- Fig. 12: eine zur in Fig. 11 gezeigten Steuerscheibe gehörige Ventilsitzscheibe in Draufsicht;
- Fig. 13: eine Paarung der in Fig. 11 und Fig. 12 gezeigten Ventilscheiben, wobei die Steuerscheibe sich in Absperrstellung zur Ventilsitzscheibe befindet;
- Fig. 14: die in Fig. 13 gezeigte Ventilscheibenpaarung, wobei die Steuerscheibe um 90° im Uhrzeigersinn gedreht angeordnet ist, wodurch der Kaltwasserdurchfluss voll geöffnet ist;
- Fig. 15: die in Fig. 14 gezeigte Ventilscheibenpaarung, wobei die Steuerscheibe radial verschoben ist, so dass in dieser Position der Warmwasserdurchfluss voll geöffnet und der Kaltwasserdurchfluss voll abgesperrt ist;
- Fig. 16: die in Fig. 14 gezeigte Ventilscheibenpaarung, wobei die Steuerscheibe radial so verschoben ist, dass sowohl ein Teil des Warmwasserbereichs als auch ein Teil des Kaltwasserbereichs geöffnet ist und Mischwasser bei voll geöffneter Gesamtdurchflussstellung erzeugt wird.

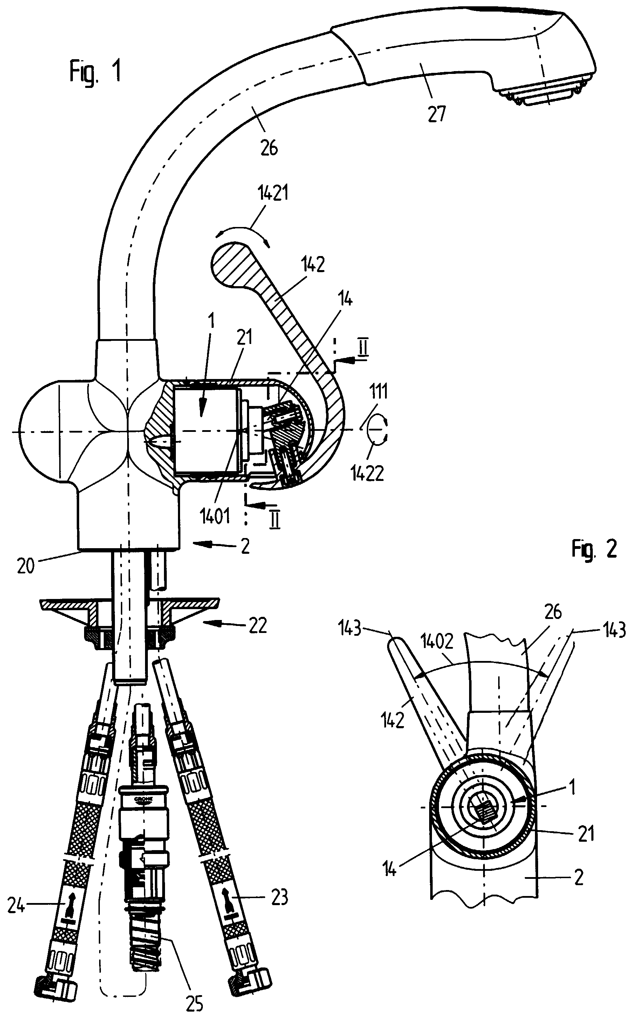

Der Einfachheit halber sind bei den Ausführungsbeispielen in der Zeichnung gleiche oder entsprechende Elemente mit jeweils gleichen Bezugszeichen versehen.
Ein erstes Ausführungsbeispiel der Erfindung ist in der Zeichnung Fig. 1 bis 10 dargestellt.
Ein Mischventil 1 ist hierbei an einer Anschlussfläche eines Armaturenkörpers 2 angeordnet. Der Armaturenkörper 2 ist für die Installation an einem in der Zeichnung nicht dargestellten Wasch- und/oder Spültisch vorgesehen. An dem Armaturenkörper 2 ist hierbei eine Kaltwasseranschlussleitung 23 und eine Warmwasseranschlussleitung 24 sowie eine Mischwasserleitung 25 angeschlossen. Bei der Installation wird der Armaturenkörper 2 mit den Leitungen 23,24,25 sowie einem Gewindezapfen durch eine Öffnung in dem Wasch- und/oder Spültisch hindurchgesteckt, bis er mit einer Stirnfläche 20 an der Oberfläche des Wasch- und/oder Spültisches aufliegt. Danach wird unterhalb des Wasch- und/oder Spültisches mit einer bekannten Befestigungseinrichtung 22 der Armaturenkörper 2 am Wasch- und/oder Spültisch verspannt. Anschließend kann die Kaltwasseranschlussleitung 23 und die Warmwasseranschlussleitung 24 mit dem entsprechenden Versorgungsleitungsnetz verbunden werden. Die Mischwasserleitung 25 ist hierbei als Schlauchleitung in den Armaturenkörper 2 und einem Schwenkrohr 26 zurückgeführt, wobei am stromabwärts gelegenen Ende der Schlauchleitung eine Auslaufbrause 27 angeschlossen ist. Die Auslaufbrause 27 kann hierbei auf das Schwenkrohr 26 aufgesteckt werden. Die Auslaufbrause 27 kann somit sowohl als mobile Handbrause als auch als stationärer Schwenkauslauf benutzt werden.
Das Mischventil 1 ist in bekannter Weise an einer vertikal ausgebildeten Anschlussfläche des Armaturenkörpers 2 befestigt. Zur Abdeckung des vorstehenden Mischventils 1 ist hierbei eine drehbar auf dem Mischventil 1 angeordnete Hülse 21 vorgesehen, bei der ein an einem Hebel 14 des Mischventils 1 befestigtes Griffstück 142 durch einen Radialschlitz herausgeführt ist. Durch eine in Richtung der Pfeile 1421 ausgeführte Schwenkbewegung des Griffstücks 142 wird das Mischungsverhältnis des zufließenden Kalt- und Warmwassers und durch eine Drehung des Griffstücks 142 um eine Mittelachse 111 des Mischventils 1 in Richtung der Pfeile 1422 wird die Gesamtdurchflussmenge pro Zeiteinheit eingestellt. Wie es aus Fig. 2 ersichtlich ist, ist hierbei eine Drehung des Griffstücks 142 um einen Winkelbereich 1402, ausgehend von einer Griffachse 143, von etwa 45° vorgesehen, in der das Mischventil 1 aus der Absperrstellung in die voll geöffnete Stellung bringbar ist.

Das Mischventil 1 mit seinen Ventilelementen ist in einem Ventilgehäuse 11 gekapselt angeordnet, wie es insbesondere aus Fig. 3 der Zeichnung zu entnehmen ist. Das Ventilgehäuse 11 ist an einem Endbereich offen ausgebildet und ist hier von einem Bodenteil 112 verschlossen. Es bildet somit eine die Ventilelemente enthaltende Ventilkartusche, die als Baueinheit in oder am Armaturenkörper 2 befestigbar ist. Am anderen stirnseitigen Endbereich ist das Ventilgehäuse 11 mit einem im Durchmesser verringerten Ansatz 110 versehen, in dem eine drehbar eingelagerte, an einer Ventilgehäuseschulter axial abgestützte Buchse 141 angeordnet ist. In der Buchse 141 ist ein zweiarmiger Hebel 14 auf einer Schwenkachse 1401 drehfest, aber verschwenkbar angeordnet. An der inneren Stirnseite der Buchse 141 ist eine Steuerscheibe 13 mit einer Abdeckhaube 131 axial angelagert. Am inneren Endbereich des zweiarmigen Hebels 14 ist ein Zapfen 1403 ausgebildet, mit dem der Hebel 14 in eine entsprechende Ausnehmung oder Gabel der Abdeckhaube 131 eingreift, so dass sie drehtest und radial verschiebbar mit dem Hebel 14 verbunden ist. Die Steuerscheibe 13 ist aus Hartstoff, vorzugsweise Keramikmaterial, hergestellt und liegt mit einer der Abdeckhaube 131 gegenüberliegenden geglätteten Anlagefläche 133 an einer ebenfalls geglätteten Anlagefläche 121 einer Ventilsitzscheibe 12, die ebenfalls aus Hartstoff, vorzugsweise Keramikmaterial, hergestellt ist, an. Die Ventilsitzscheibe 12 ist konzentrisch zur Mittelachse 111 im Ventilgehäuse 11 drehtest angeordnet und liegt mit der von der Steuerscheibe 13 abgekehrten Stirnseite am Bodenteil 112 an, in dem Öffnungen 1120 mit Schlauchdichtungen für die Heranführung von Kalt- und Warmwasser und der Rückführung von Mischwasser in bekannter Weise ausgebildet sind. Die Anordnung der Öffnungen 1120 im Bodenteil 112 entspricht der Anordnung in einer Ventilkartusche, bei der mit einer Drehbewegung das Mischungsverhältnis und mit einer Schwenkbewegung die Gesamtdurchflussmenge einstellbar ist, wie sie beispielsweise aus der DE 32 44 121 A1 bekannt ist. Mit dieser Ausbildung kann das Mischventil 1 alternativ in herkömmliche z. B. bereits installierte Armaturenkörper eingesetzt werden. Darüber hinaus braucht für beide Ventilausbildungen nur ein Armaturenkörper auf Lager gehalten werden.
Im Anschluss an den Öffnungen 1120 ist in der Ventilsitzscheibe eine Einlassöffnung 1201 für Kaltwasser, eine Einlassöffnung 1202 für Warmwasser und eine Auslassöffnung 1203 für Mischwasser ausgebildet. In der Steuerscheibe 13 ist entsprechend zu den Einlassöffnungen 1201 und 1202 ein Durchbruch 1301 für Kaltwasser und ein Durchbruch 1302 für Warmwasser ausgebildet, die durch eine Drehbewegung des Hebels 14 um die Mittelachse 111 von der Absperrstellung zunehmend in Überdeckung mit den Einlassöffnungen 1201,1202 gebracht werden können. Die Durchbrüche 1301,1302 sind stromabwärts mit einem Misch- und/oder Überströmkanal 132 in der Abdeckhaube 131 verbunden. Der Misch- und/oder Überströmkanal 132 ist stromabwärts wiederum mit einem Durchbruch 1305 in der Steuerscheibe 13 verbunden, der in allen möglichen Stellungen der Steuerscheibe 13 zur Ventilsitzscheibe 12 mit der Auslassöffnung 1203 in der Ventilsitzscheibe 12 verbunden ist. Der Durchbruch 1305 für Mischwasser weist einen Durchmesser vom 0,5 bis 1,0-fachen, vorzugsweise vom 0,8-fachen, des Durchmessers der Auslassöffnung 1203 auf. Wird mit dem Hebel 14 eine Schwenkbewegung um die Schwenkachse 1401 ausgeführt, so wird die Steuerscheibe 13 radial zur Ventilsitzscheibe 12 verschoben, wodurch sich der Einlassquerschnitt im Bereich der Einlassöffnungen 1201,1202 und der Durchbrüche 1301,1302 gegenläufig verändern, so dass durch diese Stellbewegung das Mischungsverhältnis des zufließenden Kalt- und Warmwassers einstellbar ist.

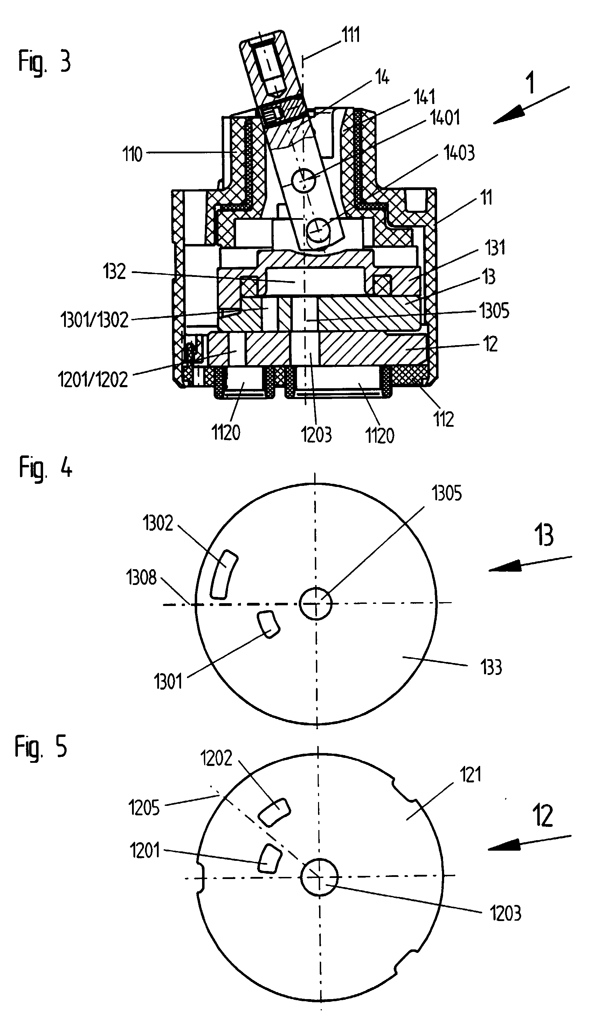

Die Anordnung der Einlassöffnung 1201 für Kaltwasser, der Einlassöffnung 1202 für Warmwasser und der Auslassöffnung 1203 für Mischwasser in der Ventilsitzscheibe 12 ist insbesondere aus Fig. 5 der Zeichnung zu entnehmen. Zu beiden Seiten einer Symmetrieachse 1205 ist mit etwa 2° Abstand in Form eines Kreisringausschnitts je eine Einlassöffnung 1201 und 1202 über einen Kreisbogen von etwa 20° angeordnet. Hierbei ist die Einlassöffnung 1202 um wenigstens der Dicke der Einlassöffnung 1201 radial nach außen verschoben angeordnet. Im Zentrum der Ventilsitzscheibe 12 ist die im Querschnitt kreisförmig ausgebildete Auslassöffnung 1203 vorgesehen.
Die in Fig. 4 gezeigte Steuerscheibe 13 trägt ebenfalls mit etwa 2° Abstand zu beiden Seiten einer Symmetrieachse 1308 einen kreisringausschnittförmigen Durchbruch 1301 für Kaltwasser und einen kreisringausschnittförmigen Durchbruch 1302 für Warmwasser. Die beiden Durchbrüche 1301 und 1302 erstrecken sich über einen Kreisbogen von etwa 20°, wobei der Durchbruch 1301 für Kaltwasser sich auf dem gleichen Radius befindet wie die Einlassöffnung 1201 für Kaltwasser. Der Durchbruch 1302 für Warmwasser ist dagegen wenigstens um das Zweifache der radialen lichten Weite des Durchbruchs 1301 nach außen verlagert. Im Zentrum der Steuerscheibe 3 ist ein im Querschnitt kreisförmiger Durchbruch 1305 ausgebildet.

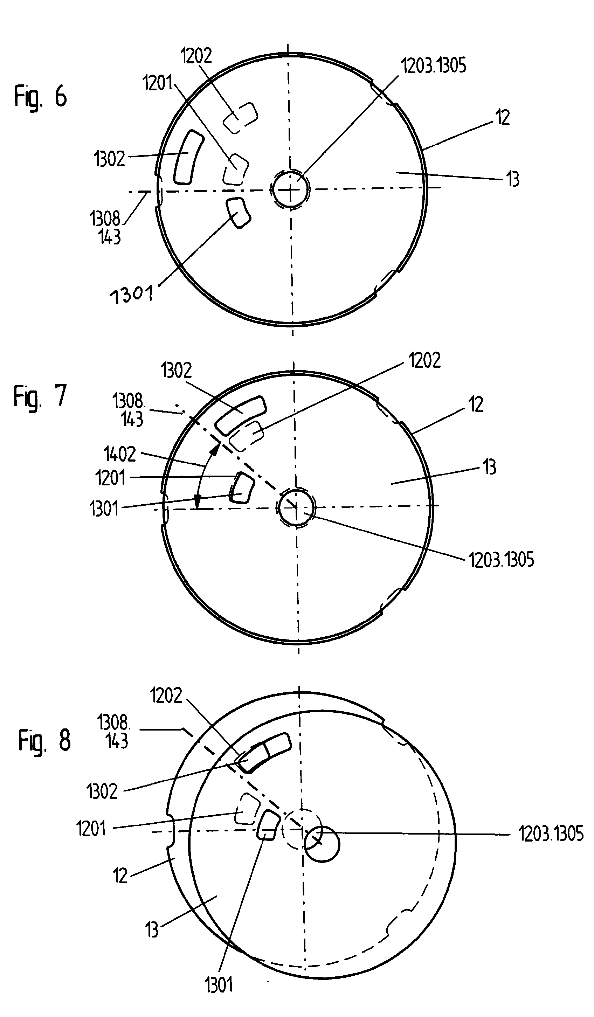

Wird die in Fig. 4 gezeigte Steuerscheibe 13 mit ihrer geglätteten Anlagefläche 133 auf die geglättete Anlagefläche 121 der Ventilsitzscheibe 12 aufgelegt, so werden die Einlassöffnungen 1201,1202 der Ventilsitzscheibe 12 von der Steuerscheibe 13 abgesperrt, wie es aus Fig. 6 der Zeichnung ersichtlich ist. Die Einlassöffnung 1201 für Kaltwasser befindet sich hierbei auf dem gleichen Kreisbogen wie der Durchbruch 1301 der Steuerscheibe 13, während die Einlassöffnung 1202 für Warmwasser radial zum Durchbruch 1302 für Warmwasser in der Steuerscheibe 13 versetzt angeordnet ist. Die Scheibenpaarung befindet sich somit im Kaltwasserbereich.
Soll eine bestimmte Menge Kaltwasser pro Zeiteinheit gezapft werden, so kann dieses durch eine Drehung der Steuerscheibe 13 im Uhrzeigersinn erfolgen. Hierbei gelangt die Einlassöffnung 1201 für Kaltwasser zunehmend mit dem Durchbruch 1301 in Überdeckung, so dass zunehmend Kaltwasser abgegeben wird. In Fig. 7 ist die Drehstellung angezeigt, in der die maximale Durchflussmenge von Kaltwasser eingestellt ist. Hierbei beträgt der Winkelbereich 1402 für die Drehung der Steuerscheibe 13, ausgehend von der Absperrstellung, etwa 45°. Beim Absperrvorgang ist die Steuerscheibe 13 entgegen dem Uhrzeigersinn in die Ausgangsstellung zurückzudrehen.

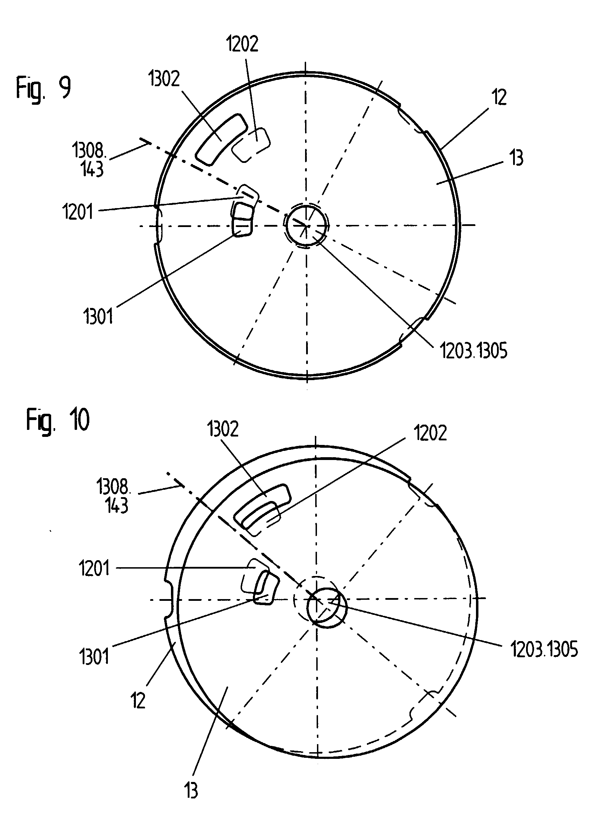

Wenn temperiertes Mischwasser eingestellt werden soll, so ist die Steuerscheibe 13 mit dem Hebel 14 radial auf der Griffachse 143 bzw. der Symmetrieachse 1308 zur Ventilsitzscheibe 12 zu verschieben. Hierbei wird die Überdeckung der Einlassöffnung 1201 von dem Durchbruch 1301 zunehmend verringert, während in umgekehrter Folge eine zunehmende Überdeckung der Einlassöffnung 1202 für Warmwasser von dem Durchbruch 1302 erfolgt. Somit wird der Durchfluss von Kaltwasser verringert und entsprechend der Durchfluss von Warmwasser erhöht, so dass mit zunehmender Verschiebung die Temperatur des Mischwassers sich erhöht, wobei die Gesamtdurchflussmenge etwa gleichbleibt. In Fig. 8 ist die radial zur Ventilsitzscheibe 12 maximal verschobene Steuerscheibe 13 dargestellt, wobei der Drehwinkel der beiden Scheiben zueinander dem in Fig. 7 entspricht. In dieser Radialstellung wird somit allein Warmwasser in maximaler Dosierung abgegeben. Soll die Durchflussmenge reduziert werden, so wird wiederum durch eine Drehung in die Ausgangsstellung, wie sie in Fig. 6 dargestellt ist, die abgegebene Warmwassermenge auf null reduziert.
In Fig. 9 der Zeichnung befindet sich die Scheibenpaarung in einer halb geöffneten Kaltwasserposition.

In Fig. 10 befindet sich die Scheibenpaarung in mittlerer Mischstellung in voll geöffneter Position.

Wie vorstehend dargelegt, kann somit durch eine Drehbewegung der Steuerscheibe 13 zur Ventilsitzscheibe 12 die Gesamtdurchflussmenge von Null bis zum Maximum über den Winkelbereich 1402 von etwa 45° eingestellt werden. Unabhängig von der Mengenregulierung kann durch eine Radialverschiebung der Steuerscheibe 13 auf der Griffachse 143 bzw. der Symmetrieachse 1308 zur Ventilsitzscheibe 12 das Mischungsverhältnis des zufließenden Kalt- und Warmwassers eingestellt werden, so dass durch diese Bewegung die Temperatur des abgegebenen Mischwassers einstellbar ist.

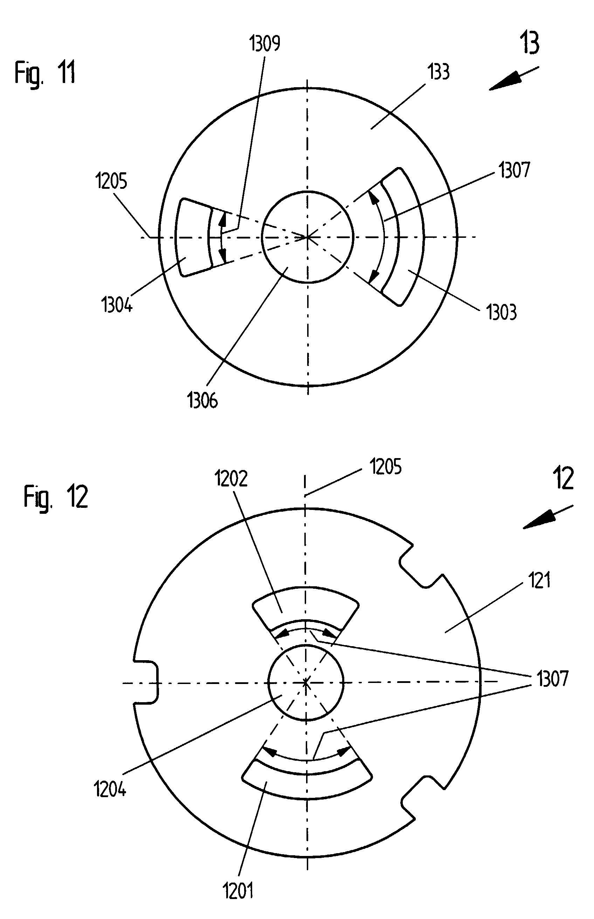

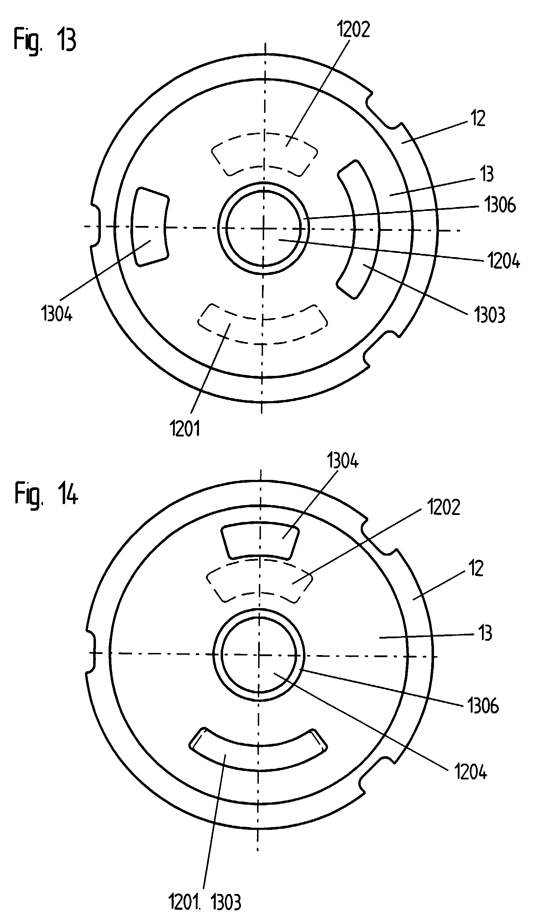

In Fig. 11 bis 16 der Zeichnung ist ein abgewandeltes Paar von Ventilscheiben dargestellt, das alternativ in das in Fig. 3 gezeigte Ventilgehäuse 11 einsetzbar ist. Bei der in Fig. 12 gezeigten Ventilsitzscheibe 12 ist die Kaltwassereinlassöffnung 1201 und die Warmwassereinlassöffnung 1202 symmetrisch auf einer als Durchmesser ausgebildeten Symmetrieachse 1205 jeweils in einer Scheibenhälfte angeordnet. Im Zentrum der Ventilsitzscheibe 12 befindet sich eine Auslassöffnung 1204 mit kreisförmigen Querschnitt. Die Einlassöffnung 1201 für Kaltwasser und die Einlassöffnung 1202 für Warmwasser sind als Kreisringausschnitte ausgebildet und erstrecken sich über einen Kreisbogen von etwa 60°, wobei die Einlassöffnung 1201 für Kaltwasser einen Kreisbogen mit größerem Radius aufweist als die Einlassöffnung 1202 für Warmwasser.
In der in Fig. 11 gezeigten Steuerscheibe 13 ist ebenfalls auf einer als Durchmesser ausgebildeten Symmetrieachse 1205 in der einen Hälfte ein Durchbruch 1303 für Kaltwasser und in der anderen Hälfte ein Durchbruch 1304 für Warmwasser vorgesehen. Im Zentrum befindet sich ein Durchbruch 1306 für Mischwasser mit kreisförmigem Querschnitt. Beide Durchbrüche 1303 und 1304 sind als Kreisringausschnitte ausgebildet, wobei der Durchbruch 1304 einen Kreisbogen mit größerem Radius aufweist. Der Durchbruch 1303 erstreckt sich über einen Bogen von etwa 60°, während der Durchbruch 1304 sich über einen Bogen von etwa 30° erstreckt.
Wird auf der Anlagefläche 121 der Ventilsitzscheibe 12 die Steuerscheibe 13 mit ihrer Anlagefläche 133 angelagert, so entsteht die in Fig. 13 gezeigte Konfiguration der Einlassöffnungen 1201,1202 zu den Durchbrüchen 1303 und 1304. Die einzelnen Querschnittflächen der Einlassöffnungen 1201,1202 und der Durchbrüche 1303,1304 sind dabei etwa gleich groß ausgebildet. Die Auslassöffnung 1204 für Mischwasser weist hierbei einen Durchmesser vom 0,5 bis 1,0-fachen, vorzugsweise vom 0,8-fachen, des Durchbruchs 1306 auf. In dieser Drehposition sind die Einlassöffnungen 1201 und 1202 von der Steuerscheibe 13 abgesperrt. Der Wasserdurchfluss ist somit unterbrochen.
Wird in dieser Stellung die Steuerscheibe 13 im Uhrzeigersinn verdreht, so gelangt zunehmend der Durchbruch 1303 mit der Einlassöffnung 1201 in Überdeckung, so dass zunehmend die Abhängigkeit vom Drehwinkel der Kaltwasserdurchfluß freigegeben wird.
Ausgehend von der in Fig. 13 dargestellten Drehstellung der Steuerscheibe 13 zur Ventilsitzscheibe 12 kann mit einem Drehwinkel von etwa 90° die maximale Durchflussmenge eingestellt werden, wie es in Fig. 14 gezeigt ist. Hierbei ist die Einlassöffnung 1201 für Kaltwasser völlig von dem Durchbruch 1303 für Kaltwasser überdeckt, während der Durchbruch 1304 für Warmwasser radial verschoben hinter der Einlassöffnung 1202 für Warmwasser angeordnet ist. Es wird somit allein Kaltwasser abgegeben.

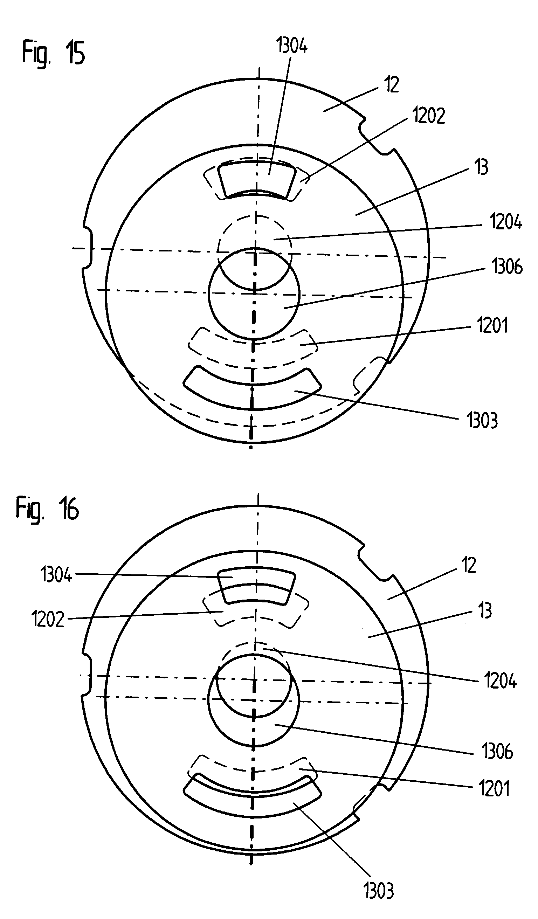

Durch eine Radialverschiebung der Steuerscheibe 13 mit dem Hebel 14, wobei die Griffachse 143 sich mit der Symmetrieachse 1205 deckt, erfolgt zunehmend eine Überdeckung der Einlassöffnung 1202 für Warmwasser von dem Durchbruch 1304, während gleichzeitig die Überdeckung der Einlassöffnung 1201 von dem Durchbruch 1303 um den gleichen Betrag verringert wird. Hierdurch wird zunehmend mehr Warmwasser und entsprechend weniger Kaltwasser abgegeben, so dass die Mischwassertemperatur entsprechend der Radialverschiebung zunimmt. In Fig. 15 der Zeichnung ist die Maximalstellung der Radialverschiebung angezeigt. In dieser Stellung wird nur noch Warmwasser abgegeben.
In Fig. 16 ist eine mittlere Radialverschiebung der Steuerscheibe 13 zur Ventilsitzscheibe 12 dargestellt, so dass in dieser Position Mischwasser von mittlerer Temperatur erzeugt wird.

In jeder Mischstellung kann durch die Verstellung des Drehwinkels der Steuerscheibe 13 die Gesamtdurchflussmenge bestimmt werden, während mit einer Radialverschiebung allein das Mischungsverhältnis bzw. die Temperatur des abgegebenen Wassers bestimmt wird.

Da bei diesem Ausführungsbeispiel die Einlassöffnung 1201,1202 diametral gegenüberliegen und zwischen den beiden Einlassöffnungen die Auslassöffnung 1304 angeordnet ist, wäre bei dem in Fig. 3 der Zeichnung dargestellten Mischventilgehäuse 11 ein entsprechend abgewandeltes Bodenteil vorzusehen. Hierbei könnte das Bodenteil so gestaltet werden, dass die Anschlusskonfiguration am Armaturenkörper 2 unverändert beibehalten werden kann. Es könnte dann das erfindungsgemäße Ventil auch an einem herkömmlichen Armaturenkörper für ein Ventil, bei dem die Mengensteuerung durch eine Radialbewegung und die Mischsteuerung durch eine Drehbewegung erfolgt, alternativ eingesetzt werden.

Bei den vorstehend beschriebenen Ausführungsbeispielen wird das zufließende Kalt- und Warmwasser in einem Misch- und/oder Überströmkanal 132 zu Mischwasser vermischt und über einen Durchbruch 1305,1306 für Mischwasser durch die in der Ventilsitzscheibe 12 angeordneten Auslassöffnung 1203,1204 abgegeben. Selbstverständlich kann aber auch das Mischwasser unmittelbar aus dem Misch- und/oder Überströmkanal in einen Auslauf abgegeben werden, so dass der Durchbruch 1305,1306 und die Auslauföffnung 1203,1204 nicht benötigt werden. Darüber hinaus kann unmittelbar am Durchbruch 1301 für Kaltwasser und am Durchbruch 1302 für Warmwasser stromabwärts jeweils eine separate Leitung angeschlossen werden, durch die das kalte und das warme Wasser separat einem Auslaufmundstück zugeführt wird und erst im Bereich des Auslaufmundstücks zu Mischwasser vermischt wird.

## Patentansprüche

1. Ventil, bestehend aus
- einem Ventilgehäuse (11) mit einer Mittelachse (111),
- einer Ventilsitzscheibe (12), die im Ventilgehäuse (11) ortsfest zu dessen Mittelachse (111) gelagert ist, und die wenigstens auf einem um die Mittelachse (111) angeordneten Kreisbogen eine Einlassöffnung für Kaltwasser (1201) und eine Einlassöffnung für Warmwasser (1202) aufweist,
- einer Steuerscheibe (13), die auf der Ventilsitzscheibe (12) in zwei Freiheitsgraden verstellbar angelagert und die mit wenigstens einem Misch- und/oder Überströmkanal (132) versehen ist, der mit den Einlassöffnungen (1201,1202) zum Einstellen des Mischungsverhältnisses und der Gesamtdurchflussmenge in Verbindung bringbar ist,
- einem im Ventilgehäuse (11) in zwei Freiheitsgraden bewegbar angeordneten Hebel (14), der mit der Steuerscheibe (13) und einem Griffstück (142) zur Steuerung verbunden ist,
dadurch gekennzeichnet, dass die Steuerscheibe (13) zwei Durchbrüche (1301,1302,1303,1304) für Kalt- und Warmwasser zur Verbindung mit den Einlassöffnungen (1201,1202) in der Ventilsitzscheibe (12) aufweist, wobei wenigstens die Durchbrüche (1301,1302,1303, 1304) für Kalt- und Warmwasser auf unterschiedlichen Kreisradien angeordnet sind, derart, dass die Einlassöffnungen (1201,1202) mit beiden Durchbrüchen (1301,1302,1303,1304) maximal zur Hälfte in Überdeckung gelangen können.

2. Ventil nach Anspruch 1, dadurch gekennzeichnet, dass ein Durchbruch (1301,1303) für Kaltwasser und ein Durchbruch (1302,1304) für Warmwasser vorgesehen ist, wobei jeder der beiden Durchbrüche (1301,1302,1303,1304) mit einem separaten Überströmkanal zu einem Misch- und/oder Ausflussmundstück versehen ist.

3. Ventil nach Anspruch 1, dadurch gekennzeichnet, dass die Durchbrüche (1301,1302,1303,1304) der Steuerscheibe (13) in einen Misch- und/oder Überströmkanal (132) münden.

4. Ventil nach Anspruch 1 oder 3, dadurch gekennzeichnet, dass ein oder mehrere Misch- und/oder Überströmkanäle (132) vorgesehen sind, die in einen Durchbruch (1305/1306) für Mischwasser in der Steuerscheibe (13) münden, wobei der Durchbruch (1305,1306) mit einer Auslassöffnung (1203,1204) in der Ventilsitzscheibe (12) in allen möglichen Steuerstellungen in Verbindung steht.

5. Ventil nach wenigstens einem der Ansprüche 1 bis 4, dadurch gekennzeichnet, dass die Einlassöffnungen (1201,1202) in der Ventilsitzscheibe (12) und die zugehörigen Durchbrüche (1301,1302,1303,1304) in der Steuerscheibe (13) als Kreisringausschnitte ausgebildet sind.

6. Ventil nach wenigstens einem der Ansprüche 1 bis 5, dadurch gekennzeichnet, dass die Einlassöffnungen (1201,1202) der Ventilsitzscheibe (12) und die zugehörigen Durchbrüche (1301,1302) der Steuerscheibe (13) in einer Hälfte der Scheiben angeordnet sind, derart, dass jeweils in einem Quadranten zu beiden Seiten einer Symmetrieachse (1205/1308) eine Einlassöffnung (1201,1202) und ein Durchbruch (1301,1302) vorgesehen ist.

7. Ventil nach Anspruch 6, dadurch gekennzeichnet, dass die Einlassöffnungen (1201,1202) und die zugehörigen Durchbrüche (1301,1302) jeweils einen Kreisbogen von etwa 20° bilden.

8. Ventil nach wenigstens einem der Ansprüche 1 bis 5, dadurch gekennzeichnet, dass die Einlassöffnungen (1201,1202) der Ventilsitzscheibe (12) und die zugehörigen Durchbrüche (1303,1304) der Steuerscheibe (13) diametral gegenüberliegend auf einer Symmetrieachse (1205) angeordnet sind, wobei die Einlassöffnungen (1201,1202) und der Durchbruch (1303) sich kreisringausschnittförmig über einen Winkel (1307) von etwa 60° und der Durchbruch (1304) über einen Winkel (1309) von etwa 30° erstrecken.

9. Ventil nach Anspruch 8, dadurch gekennzeichnet, dass die einzelnen Querschnittsflächen der Einlassöffnungen (1201,1202) und der Durchbrüche (1303,1304) etwa gleich groß ausgebildet sind.

10. Ventil nach wenigstens einem der Ansprüche 1 bis 9, dadurch gekennzeichnet, dass die Auslassöffnung (1203,1204) im Zentrum der Ventilsitzscheibe (12) auf der Mittelachse (111) ausgebildet ist.

11. Ventil nach Anspruch 10, dadurch gekennzeichnet, dass der Durchbruch (1305,1306) für Mischwasser im Zentrum der Steuerscheibe (13) ausgebildet ist.

12. Ventil nach Anspruch 10 oder 11, dadurch gekennzeichnet, dass die Auslassöffnung (1203,1204) wenigstens im Bereich der Anlagefläche (121) für die Steuerscheibe (13) im Querschnitt kreisförmig ausgebildet ist.

13. Ventil nach wenigstens einem der Ansprüche 10 bis 12, dadurch gekennzeichnet, dass der Durchbruch (1305,1306) für Mischwasser wenigstens in dem Bereich der Anlagefläche (133) im Querschnitt kreisförmig ausgebildet ist.

14. Ventil nach Anspruch 13, dadurch gekennzeichnet, dass der Durchbruch (1305) für Mischwasser einen Durchmesser vom 0,5 bis 1,0-fachen des Durchmessers der Auslassöffnung (1203) aufweist.

15. Ventil nach Anspruch 13, dadurch gekennzeichnet, dass die Auslassöffnung (1204) für Mischwasser einen Durchmesser vom 0,5 bis 1,0fachen des Durchmessers des Durchbruchs (1306) aufweist.

16. Ventil nach wenigstens einem der Ansprüche 1 bis 15, dadurch gekennzeichnet, dass die Einlassöffnung (1201) für Kaltwasser und der Durchbruch (1301,1303) für Kaltwasser auf einem Kreisbogen mit gleichem Radius angeordnet sind.

17. Ventil nach Anspruch 16, dadurch gekennzeichnet, dass die Einlassöffnung (1202) für Warmwasser auf einem Kreisbogen angeordnet ist, dessen Radius wenigstens eine Länge aufweist, die dem Radius des Kreisbogens und der Dicke der Einlassöffnung (1201) für Kaltwasser entspricht.

18. Ventil nach Anspruch 16 oder 17, dadurch gekennzeichnet, dass der Durchbruch (1302) für Warmwasser auf einem Kreisbogen angeordnet ist, dessen Radius wenigstens eine Länge aufweist, die dem Radius des Kreisbogens und der zweifachen Dicke der Einlassöffnung (1201) für Kaltwasser entspricht.

19. Ventil nach wenigstens einem der Ansprüche 1 bis 18, dadurch gekennzeichnet, dass in dem Ventilgehäuse (11) die Ventilelemente als Baueinheit gekapselt angeordnet sind, wobei die Außenabmessungen des Ventilgehäuses (11) etwa den Abmessungen einer Ventilkartusche entspricht, bei der mit einer Drehbewegung das Mischungsverhältnis und mit einer Schwenkbewegung die Gesamtdurchflussmenge einstellbar ist.

20. Ventil nach wenigstens einem der Ansprüche 1 bis 19, dadurch gekennzeichnet, dass im Bodenteil (112) des Ventilgehäuses (11) Öffnungen (1120) für den Anschluss vorgesehen sind, die denen in einer Ventilkartusche entsprechen, bei der mit einer Drehbewegung das Mischungsverhältnis und mit einer Schwenkbewegung die Gesamtdurchflussmenge einstellbar ist.
